(19) Europäisches Patentamt
European Patent Office
Office européen des brevets

(11) **EP 1 299 226 B1**

(12) **FASCICULE DE BREVET EUROPEEN**

(45) Date de publication et mention
de la délivrance du brevet:
**16.02.2005 Bulletin 2005/07**

(21) Numéro de dépôt: **01954063.2**

(22) Date de dépôt: **09.07.2001**

(51) Int Cl.⁷: **B29C 70/50**, B29B 15/10,
B29C 70/20, D04H 1/48,
D02G 3/04, D02G 3/40,
D04H 3/04

(86) Numéro de dépôt international:
**PCT/FR2001/002208**

(87) Numéro de publication internationale:
**WO 2002/006036 (24.01.2002 Gazette 2002/04)**

(54) **NAPPE UNIDIRECTIONNELLE EN MATERIAU COMPOSITE**

UNIDIREKTIONALE VERBUNDWERKSTOFFBAHN

UNIDIRECTIONAL WEB MADE OF COMPOSITE MATERIAL

(84) Etats contractants désignés:
**AT BE CH CY DE DK ES FI FR GB GR IE IT LI LU
MC NL PT SE TR**

(30) Priorité: **13.07.2000 FR 0009257**

(43) Date de publication de la demande:
**09.04.2003 Bulletin 2003/15**

(73) Titulaire: **SA Schappe**
**88520 Ban de Laveline (FR)**

(72) Inventeurs:
• **GUEVEL, Jean**
**F-01480 Riottier (FR)**

• **BONTEMPS, Guy**
**F-01230 Tenay (FR)**

(74) Mandataire: **Maureau, Philippe et al**
**Cabinet GERMAIN & MAUREAU,
BP 6153
69466 Lyon Cedex 06 (FR)**

(56) Documents cités:
EP-A- 0 062 142     EP-A- 0 156 599
EP-A- 0 466 618     EP-A- 0 488 389
EP-A- 0 599 695     EP-A- 0 602 618
EP-A- 1 054 091     WO-A-96/01177
WO-A-98/44183       FR-A- 2 634 790
US-A- 6 045 906

**Description**

La présente invention a pour objet une nappe unidirectionnelle en matériau composite.

Une telle nappe est destinée à réaliser des pièces industrielles de forme complexe, comportant notamment des zones embouties, et pouvant être utilisée dans différents domaines, tels que le domaine de l'aéronautique ou le domaine de l'automobile.

Les matériaux composites sont d'un prix de revient élevé et sont généralement réservés à des applications très techniques. Les produits composites se présentent souvent sous forme de tissus, de tresses ou de tricots. Afin de limiter le coût, il a déjà été imaginé d'utiliser des nappes unidirectionnelles de filaments.

De façon connue en soi, les filaments sont juxtaposés et maintenus parallèles en limitant leur superposition.

Il est procédé à un poudrage thermoplastique, suivi d'un calandrage par passage dans des cylindres lisses pour obtenir une nappe rigidifiée. Suivant une alternative, il est possible de faire passer les filaments parallèles dans un bain de polymère fondu, avant d'exprimer l'excès de polymère.

L'inconvénient d'une telle nappe, outre son prix de revient élevé, est de fournir un réseau continu de filaments dans le sens longitudinal, qui se prête mal à des déformations visant à la réalisation de pièces de forme complexe, et notamment d'emboutis profonds.

Il est également connu par le document EP 0 466 618, ou le document FR-A-2 634 790 de réaliser des fils hybrides obtenus en mélangeant des fibres discontinues de carbone et des fibres matrices thermoplastique, en vue de l'obtention de préformes diverses à partir de tissus, de tresses, de tricots ou de nappes unidirectionnelles.

De telles nappes unidirectionnelles sont donc réalisées à partir de fils de section circulaire, qui doivent être ourdis, puis liés transversalement à partir d'un fil polymère. Ce fil polymère doit être de même nature que celui qui constitue la fraction fusible contenue dans le fil. Le pas des fils constituant la chaîne doit être suffisant pour permettre un étalement des fibres après la fusion de la matrice, tout en évitant les vides interstitiels. Cette nappe, du fait que le réseau de fils doit être ouvert est peu maniable et fragile. Elle se prête peu à la découpe de préformes pour la réalisation ultérieure de pièces consolidées. En outre, la fabrication du fil, puis de la nappe unidirectionnelle, sont coûteux et rendent et le produit mal adapté aux contraintes économiques pour différentes branches de l'industrie.

Le but de l'invention est de fournir une nappe unidirectionnelle en matériau composite comportant au moins un type de fibres de renfort, obtenue de façon économique, et destinée à la fabrication de pièces complexes avec éventuellement des emboutis profonds, tout en permettant un temps de mise en oeuvre et de réalisation très court.

A cet effet, la nappe unidirectionnelle qu'elle concerne, comprend un mélange intime de rubans mélangés de fibres longues de renfort discontinues obtenues par craquage et de fibres longues de matrice thermoplastique, ces différentes fibres étant parallèles dans le mélange.

La technologie du craquage des fibres continues offre la possibilité d'obtenir des rubans de fibres discontinues, de longueurs variables, pour les fibres à haut module et haute résistance, telles qu'en carbone, verre ou para-aramide. De la même manière, les fibres polymériques thermoplastique peuvent subir la même transformation ou peuvent être obtenues par coupage mécanique en longueurs variables et être transformées par voie traditionnelle de cardage, peignage et étirage.

Suivant une caractéristique de cette nappe, la hauteur moyenne des fibres de renfort est de l'ordre de 80 mm avec une divergence des hauteurs inférieure ou égale à 35 % par rapport à cette hauteur moyenne.

En ce qui concerne les hauteurs des fibres thermoplastiques, elles sont comprises dans un intervalle variant entre 40 et 180 mm.

Suivant une autre caractéristique de l'invention, le nombre de traces T de fibres de renfort dans le mélange final est supérieur à 300. Cela permet d'obtenir une excellente intimité du mélange de fibres pour l'obtention d'une nappe pré-consolidée dans un intervalle de temps le plus court possible.

Selon une caractéristique de cette nappe, les fibres de renfort constitutives d'une nappe sont choisies dans au moins l'une des familles de matériaux suivants :

- carbone, issu de précurseurs PAN, BRAI ou rayonne avec le critère : 190 GPa < E < 700 GPa (E étant le module de traction),
- verre de type E, R, S, D,
- para-aramide avec le critère : 60 GPa < E < 140 GPa (E étant le module de traction),
- polybenzymidazole (PBO) de type AS-H-M avec le critère E > 190 GPa (E étant le module de traction).

Suivant une possibilité, les fibres matrices constitutives d'une nappe sont choisies dans au moins l'une des familles de matériaux thermostables suivants : Polyphénylène Sulfide (PPS), Polyéther Imide (PEI), Polyéther Sulfone (PES), Polyéther Ether Cétone (PEEK), Polyéther Cétone (PEK).

Suivant une autre possibilité, les fibres matrices constitutives d'une nappe sont choisies dans au moins l'une des familles de matériaux thermoplastiques standards suivants : Polyéthertéréphtalate (PET), Polyamide (Pa), Polypropylène (PP), Polycarbonate (PC), Polybutadiène Téréphtalate (PBT), Polyéthylène (PE).

Afin d'assurer une meilleure cohésion à la nappe, celle-ci comprend un ruban ou fil de composition identique aux rubans mélangés formant la direction longitudinale, disposé dans une direction sensiblement perpendiculaire aux fibres de renfort et, par exemple, en étant déposé en zigzag sur la nappe.

Un procédé de fabrication de cette nappe consiste :

- à réaliser des rubans de fibres de renfort ayant subi une opération de craquage et des rubans de fibres matrices thermoplastiques ayant subi une opération de craquage ou de coupage,

- à réaliser le mélange intime de rubans de ces deux composants avec $n_1$ rubans de fibres de renfort et $n'_1$ rubans de fibres matrices, en exerçant une traction sur les différents rubans parallèles et en les faisant passer dans un système à aiguilles pour paralléliser les fibres tout en les mélangeant,

- à réaliser successivement cette même opération à partir de rubans multi-composants résultant chaque fois de l'opération précédente,

- à amener un ensemble de rubans parallèles constitué d'un mélange intime de fibres de renfort et de fibres matrices obtenu au cours des opérations précédentes, et de façon continue dans une enceinte de chauffée à une température supérieure de plusieurs dizaines de °C à la température de fusion de la matière constitutive de la matrice thermoplastique,

- à faire passer la nappe entre des cylindres refroidis, qui abaissent la température de la nappe en-dessous de la température de solidification du polymère, et qui exercent une pression sur la nappe pour assurer la formation d'une préforme constituée de fibres de renfort parallèles les unes aux autres, noyées dans une matrice solide de polymère thermoplastique.

Avantageusement, avant introduction de la nappe dans l'enceinte chauffée, ce procédé consiste à déposer sur celle-ci en continu un ruban ou un fil de composition identique aux rubans mélangés formant la direction longitudinale formant, par exemple, des zigzags, dans une direction perpendiculaire à la direction des fibres de renfort.

De toute façon, l'invention sera bien comprise à l'aide de la description qui suit, en référence au dessin schématique annexé représentant, à titre d'exemple non limitatif, une forme d'exécution d'un dispositif pour l'obtention de cette nappe, ainsi que des illustrations de la masse fibreuse :

Figure 1 est une vue de côté d'une machine de mélange ;
Figure 2 en est une vue partielle de dessus ;
Figure 3 est une vue de côté d'une machine de pré-consolidation de la nappe ;
Figures 4 et 5 sont deux vues du mélange des fibres constitutives de la nappe respectivement en cours de fabrication de cette nappe et pré-préconsolidation.

En pratique, des rubans de fibres de renfort et des rubans de fibres matrices sont obtenus par une opération de craquage et de mélange des fibres, pour les fibres de renfort, et par une opération de craquage ou une opération de coupage pour les fibres matrices.

Les différents rubans de fibres de renfort et de fibres matrices thermoplastique sont déposés dans des pots respectivement 2, 3 disposés sous une table 4. Les rubans sortant des pots traversent des ouvertures 5 ménagées dans la table, les ouvertures 5 des différents pots étant décalés transversalement les unes par rapport aux autres, et certains des pots étant décalés longitudinalement les uns relativement aux autres. Chaque ruban, après avoir traversé la table 4, passe sur un rouleau motorisé 6 et est entraîné longitudinalement à la table, tous les rubans étant parallèles les uns aux autres. Les différents rubans passent entre deux cylindres d'entraînement 7 avant d'entrer dans une tête d'étirage 8. Cette tête d'étirage 8 comprend deux peignes 9 en vis-à-vis, animés d'un mouvement de déplacement carré, c'est-à-dire un mouvement d'avance dans lequel les doigts des peignes sont engagés dans les rubans et se déplacent dans le même sens que ceux-ci, suivi d'un mouvement d'écartement des peignes et de retour de ceux-ci en position arrière à distance des rubans, avant de pénétrer à nouveau dans ceux-ci. En sortie de la tête d'étirage 8 sont disposés des cylindres d'appel 10, qui tournent plus vite que les cylindres d'entraînement 7 et procurent un mouvement supérieur au mouvement de translation des peignes 9. L'ensemble des composants permettent d'exercer une parallélisation des fibres les unes relativement aux autres, ainsi qu'un mélange des fibres de renfort et des fibres matrices. Un ruban mélangé 12 est recueilli dans un pot de réception 13. Il est procédé successivement à plusieurs mélanges de ce type, en prenant pour chaque mélange, suivant le premier, une série de rubans mélangés obtenus à l'issue du mélange immédiatement précédent. C'est ainsi que, si :

- la première machine réalise le mélange de $n_1$ rubans de fibres de renfort et de $n'_1$ rubans de fibres matrices,

- la deuxième machine réalise le mélange de $n_2$ rubans bi-composants issus de la machine n° 1,

- la troisième machine réalise le mélange de $n_3$ rubans bi-composants issus de la machine n° 2,

- et ainsi de suite jusqu'à la $m^{ième}$ machine, qui réalise le mélange de nm rubans bi-composants issus de la machine n° $m_{-1}$.

Le mélange est considéré comme valable si le produit

$$n \times n_2 \times n_3 \times .... nm > 300 = T \text{ (T : nombre de traces)}$$

avec la condition

$$n = n_1 \text{ si } n_1 < n'$$

$$n = n'_1 \text{ si } n'_1 < n_1$$

L'intimité du mélange est une condition essentielle pour l'obtention d'une nappe préconsolidée dans un intervalle de temps le plus court possible.

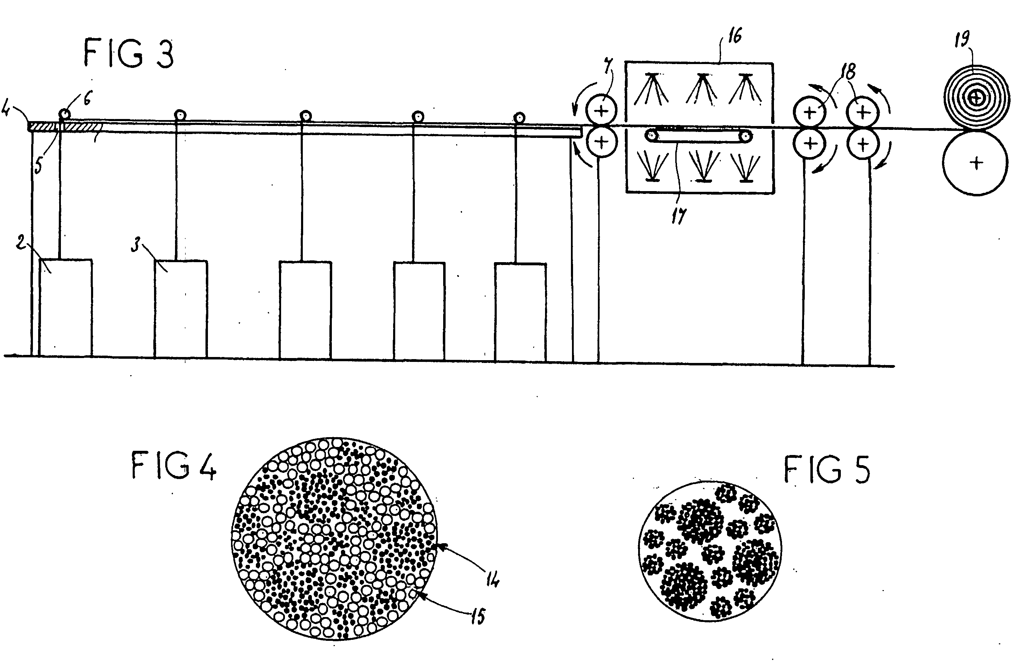

Les figures 4 et 5 représentent deux vues schématiques en coupe transversale de la masse fibreuse respectivement après mélange, c'est-à-dire à l'issue de l'opération qui vient d'être décrite et après libération des fibres matrices thermoplastique. Dans ces figures, et notamment à la figure 4, les fibres de renfort sont désignées par la référence 14 et les fibres matrices par la référence 15. A la figure 5, les fibres matrices ne sont plus matérialisées, puisque celles-ci ont fondu.

La bonne répartition des fibres de renfort et des fibres matrices permet l'obtention d'une nappe préconsolidée dans un temps très bref.

En effet, le temps d'imprégnation est donné par la loi de Darcy

$$t_i = \frac{\eta . x^2 \ (1 - vf)}{k \ (Pe - Px)}$$

$t_i$ :     temps d'imprégnation (seconde)
$\eta$ :     Viscosité dynamique du polymère fondu (Pa.s)
$x$ :     Distance moyenne entre fibres matrice (m)
$vf$ :     Volume de matrice en faction décimale
$k$ :     Perméabilité du mélange binaire fibreux (m$^2$)
$Pe$ :     Pression extérieure appliquée sur la préforme (Pa)
$Pc$ :     Pression capilaire (Pa)

Nous pouvons constater la très forte dépendance du temps d'imprégnation $t_i$ par rapport à la distance moyenne x des fibres matrices.

Cette distance x varie en fonction inverse du nombre de traces T, en atteignant toutefois une valeur minimum incompressible.

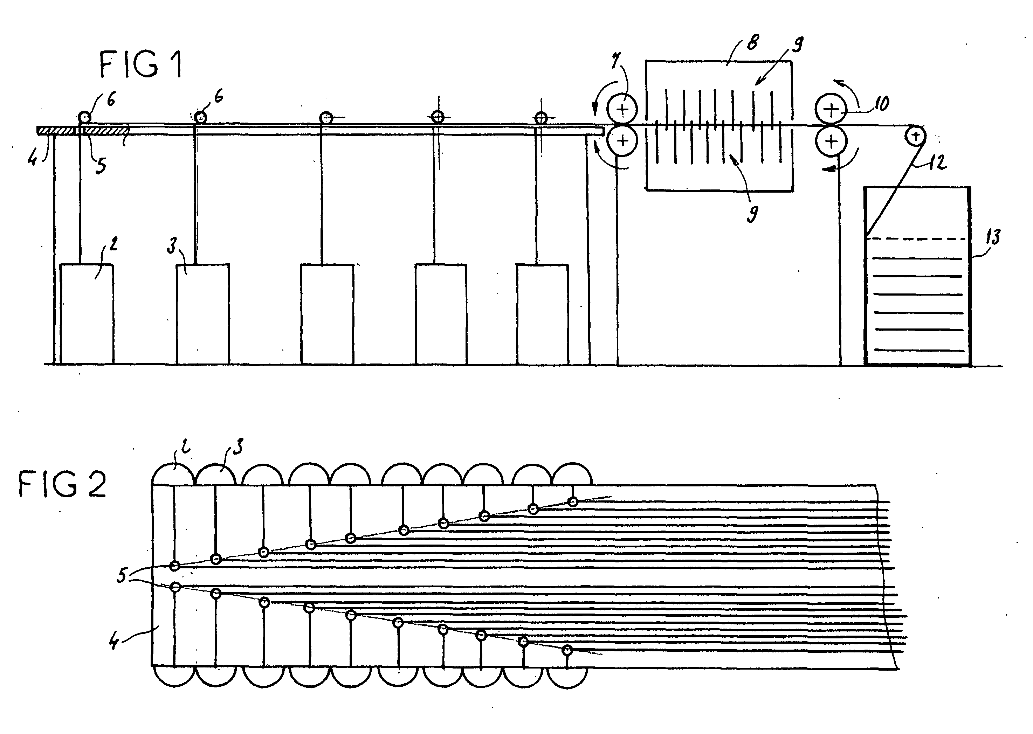

La figure 3 représente une machine de préconsolidation en continu d'une nappe unidirectionnelle. Cette machine présente la même structure générale que la machine représentée aux figures 1 et 2, de telle sorte que les mêmes éléments sont désignés par les mêmes références que précédemment. Dans cette machine, tous les pots 2, 3 contiennent des rubans mélangés obtenus à l'issue de la dernière opération de mélange. Après être passée entre deux cylindres d'entraînement en acier inoxydable, la nappe pénètre dans une enceinte 16 chauffée à une température supérieure à la température de fusion du polymère, cette augmentation de température pouvant être de l'ordre de 60°C. Le chauffage peut être réalisé par infrarouge, de longueurs d'ondes moyennes, pour assurer l'absorption maximum d'énergie dans la masse fibreuse. L'enceinte chauffée 16 est close et réfléchissante. Un convoyeur 17 en acier inoxydable perforé soutient la nappe fibreuse pendant l'opération de chauffage-fusion du polymère. La vitesse d'avancement de la nappe est identique à la vitesse d'avancement de la nappe sur la table d'alimentation.

En sortie de l'enceinte 16 sont disposées deux séries 18 de cylindres de calandrage, qui compriment la nappe en abaissant la température au-dessous du point de solidification du polymère. Ces cylindres métalliques 18 sont revêtus de polytrétafluoréthylène pour ceux de la partie inférieure et garnis de caoutchouc silicone ou fluoré pour ceux de la partie supérieure. Les différents cylindres sont refroidis, par exemple, par un réseau de circulation d'eau modulable en débit. La pression exercée par les rouleaux sur la préforme doit être supérieure à 10 bars (1 bar = 101 300 Pa).

La nappe préconsolidée est ensuite enroulée sur un dispositif de réception 19 lorsque les épaisseurs de nappe sont inférieures ou égales à 0,5 mm, ou découpées en panneaux d'une longueur, par exemple, de 2 m pour des épaisseurs supérieures à 0,5 mm.

Les nappes ainsi obtenues sont constituées de fibres de renfort parallèles les unes aux autres noyées dans une matrice solide de polymère thermoplastique.

Il est ensuite possible à un industriel de découper directement des flancs en vue de réaliser des opérations de thermoformage. L'orientation des fibres peut être choisie en fonction de la direction des sollicitations par superposition de plusieurs flans découpés. Un produit fini peut être obtenu comme suit :

- découpage des flancs de nappes unidirectionnelles,
- chauffage sous infrarouge,
- dépôt dans un moule froid,
- estampage,
- évacuation.

La discontinuité des fibres de renfort induit un degré de liberté qui permet l'obtention de pièces embouties sur de grandes profondeurs sans rupture du réseau de fibres, avec un temps de cycle de production court compris entre 1 et 3 mn par exemple.

Il est donné, ci-après, un exemple de réalisation d'une nappe undirectionnelle composite selon l'invention :

- Composition :

  - 69 % de fibres de carbone craquées avec une hauteur moyenne de 80 mm et une résistance comprise entre 190 et 700 GPa
  - 31 % de fibres polyamide 12 coupées de hauteur moyenne de 80 mm

- Première machine de mélange

- 23 rubans de carbone
- 6 rubans de polyamide

- Deuxième machine de mélange

  - 12 rubans de mélange carbone + polyamide

- Troisième machine de mélange et consolidation

  - 30 rubans de mélange carbone + polyamide

- Condition de mélange optimum

$$n = n_1 = 6 \qquad n_1 < n_2 \qquad avec \; n_2 = 23$$

$$T = 6 \times 12 \times 30 = 2\,160 > 300$$

- Masse surfacique de la nappe unidirectionnelle avant et après pré-consolidation :

  - largeur 0,6 m
  - masse linéique des rubans : 14 g/m
  - masse surfacique :

$$\frac{14 \; x \; 30}{0,6} = 700 \; g \, / \, m^2$$

- Epaisseur après consolidation :

  - masse volumique du composite = 0,44x1,01 + 0,56x1,78 = 1,45 g/cm$^3$

$$\frac{700}{1,45 x 10^4} = 0,045 \; cm$$

- Température de chauffage :

  - Température de fusion du polyamide = 78°C Température four = 178+ 60 = 238°C

Comme il ressort de ce qui précède, l'invention apporte une grande amélioration à la technique existante en fournissant une nappe unidirectionnelle composite, de structure simple et de mise en oeuvre économique et rapide, permettant son utilisation dans de nombreuses applications industrielles.

Comme il va de soi, l'invention ne se limite pas à la seule forme d'exécution de cette nappe, décrite ci-dessus à titre d'exemple, elle en embrasse au contraire toutes les variantes. C'est ainsi notamment que les fibres de renfort pourraient être de plusieurs natures différentes sans que l'on sorte pour autant du cadre de l'invention.

**Revendications**

1. Nappe unidirectionnelle en matériau composite, **caractérisée en ce qu'**elle comprend un mélange intime de rubans mélangés de fibres longues de renfort (14) discontinues obtenues par craquage et de fibres longues de matrice thermoplastique (15), ces différentes fibres étant parallèles dans le mélange.

2. Nappe unidirectionnelle selon la revendication 1, **caractérisée en ce que** la hauteur moyenne des fibres de renfort est de l'ordre de 80 mm avec une divergence des hauteurs inférieure ou égale à 35 % par rapport à cette hauteur moyenne.

3. Nappe unidirectionnelle selon l'une des revendications 1 et 2, **caractérisée en ce que** le nombre de traces T de fibres de renfort dans le mélange final est supérieur à 300.

4. Nappe unidirectionnelle selon l'une des revendications 1 à 3, **caractérisée en ce que** les fibres de renfort constitutives d'une nappe sont choisies dans au moins l'une des familles de matériaux suivants :

   - carbone, issu de précurseurs PAN, BRAI ou rayonne avec le critère : 190 GPa < E < 700 GPa (E étant le module de traction),
   - verre de type E, R, S, D,
   - para-aramide avec le critère : 60 GPa < E < 140 GPa (E étant le module de traction),
   - polybenzymidazole (PBO) de type AS-H-M avec le critère E > 190 GPa (E étant le module de traction).

5. Nappe unidirectionnelle selon l'une des revendications 1 à 4, **caractérisée en ce que** les fibres matrices constitutives d'une nappe sont choisies dans au moins l'une des familles de matériaux thermostables suivants : Polyphenylène Sulfide (PPS), Polyéther Imide (PEI), Polyéther Sulfone (PES), Polyéther Ether Cétone (PEEK), Polyéther Cétone (PEK).

6. Nappe unidirectionnelle selon l'une des revendications 1 à 4, **caractérisée en ce que** les fibres matrices constitutives d'une nappe sont choisies dans au moins l'une des familles de matériaux thermoplastiques standards suivants : Polyéthertéréphtalate (PET), Polyamide (Pa), Polypropylène (PP), Polycarbonate (PC), Polybutadiène Téréphtalate (PBT), Polyéthylène (PE).

7. Nappe unidirectionnelle selon l'une des revendications 1 à 6, **caractérisée en ce que** la hauteur moyenne des fibres matrices coupées ou craquées est comprise entre 40 et 180 mm.

**8.** Nappe unidirectionnelle selon l'une des revendications 1 à 7, **caractérisée en ce qu'**elle comprend un ruban ou fil de composition identique aux rubans mélangés formant la direction longitudinale, disposé dans une direction sensiblement perpendiculaire aux fibres de renfort et, par exemple, en étant déposé en zigzag sur la nappe.

**9.** Procédé de fabrication d'une nappe unidirectionnelle en matériau composite selon l'une des revendications 1 à 8, **caractérisé en ce qu'**il consiste :

- à réaliser des rubans de fibres de renfort ayant subi une opération de craquage et des rubans de fibres matrices thermoplastiques ayant subi une opération de craquage ou de coupage,
- à réaliser le mélange intime de rubans de ces deux composants avec $n_1$ rubans de fibres de renfort et $n'_1$ rubans de fibres matrices, en exerçant une traction sur les différents rubans parallèles et en les faisant passer dans un système (7-10) à aiguilles pour paralléliser les fibres tout en les mélangeant,
- à réaliser successivement cette même opération à partir de rubans multi-composants (12) résultant chaque fois de l'opération précédente,
- à amener un ensemble de rubans parallèles constitué d'un mélange intime de fibres de renfort et de fibres matrices obtenu au cours des opérations précédentes, et de façon continue dans une enceinte de chauffée (16) à une température supérieure de plusieurs dizaines de °C à la température de fusion de la matière constitutive de la matrice thermoplastique,
- à faire passer la nappe entre des cylindres (18) refroidis, qui abaissent la température de la nappe en-dessous de la température de solidification du polymère, et qui exercent une pression sur la nappe pour assurer la formation d'une préforme constituée de fibres de renfort parallèles les unes aux autres, noyées dans une matrice solide de polymère thermoplastique.

**10.** Procédé selon la revendication 9, **caractérisé en ce qu'**avant introduction de la nappe dans l'enceinte chauffée, il consiste à déposer sur celle-ci en continu un ruban ou un fil de composition identique aux rubans mélangés formant la direction longitudinale formant, par exemple, des zigzags, dans une direction perpendiculaire à la direction des fibres de renfort.

**Patentansprüche**

**1.** In einer Richtung verlaufender Stoff aus einem Verbundmaterial, **dadurch gekennzeichnet, dass** er eine enge Mischung aus gemischten Bändern aus durch Brechen erhaltenen unterbrochenen langen Verstärkungsfasern (14) und aus langen Fasern einer thermoplastischen Matrix (15) umfasst, wobei die verschiedenen Fasern in der Mischung parallel vorliegen.

**2.** In einer Richtung verlaufender Stoff nach Anspruch 1, **dadurch gekennzeichnet, dass** die durchschnittliche Länge der Verstärkungsfasern im Bereich von 80 mm liegt, mit einer Abweichung der Längen von unterhalb oder gleich 35 % bezogen auf die durchschnittliche Länge.

**3.** In einer Richtung verlaufender Stoff nach einem der Ansprüche 1 und 2, **dadurch gekennzeichnet, dass** die Anzahl an Spuren T der Verstärkungsfasern in der endgültigen Mischung oberhalb von 300 liegt.

**4.** In einer Richtung verlaufender Stoff nach einem der Ansprüche 1 bis 3, **dadurch gekennzeichnet, dass** die für einen Stoff wesentlichen Verstärkungsfasern aus mindestens einer der folgenden Materialfamilien ausgewählt sind:

- Kohlenstoff, abgeleitet aus den Vorläufern PAN, BRAI oder Kunstseide mit den Kriterien: 190 GPa < E < 700 GPa (wobei E das Zugmodul ist)
- Glas des Typs E, R, S, D,
- Para-Aramid mit den Kriterien: 60 GPa < E < 140 GPa (wobei E das Zugmodul ist),
- Polybenzymidazol (PBO) des Typs AS-H-M mit dem Kriterium E > 190 GPa (wobei E das Zugmodul ist).

**5.** In einer Richtung verlaufender Stoff nach einem der Ansprüche 1 bis 4, **dadurch gekennzeichnet, dass** die für einen Stoff wesentlichen Matrixfasern aus mindestens einer der folgenden thermostabilen Materialfamilien ausgewählt sind: Polyphenylensuifld (PPS), Polyetherimid (PEI), Polyethersulfon (PES), Polyetheretherketon (PEEK), Polyetherketon (PEK).

**6.** In einer Richtung verlaufender Stoff nach einem der Ansprüche 1 bis 4, **dadurch gekennzeichnet, dass** die für einen Stoff wesentlichen Matrixfasern aus mindestens einer der folgenden thermoplastischen Standardmaterialfamilien ausgewählt sind: Polyetherterephthalat (PET), Polyamid (Pa), Polypropylen (PP), Polycarbonat (PC), Polybutadienterephthalat (PBT), Polyethylen (PE).

**7.** In einer Richtung verlaufender Stoff nach einem der Ansprüche 1 bis 6, **dadurch gekennzeichnet,**

**dass** die durchschnittliche Länge der geschnittenen oder gebrochenen Matrixfasern zwischen etwa 40 und 180 mm liegt.

8.  In einer Richtung verlaufender Stoff nach einem der Ansprüche 1 bis 7, **dadurch gekennzeichnet, dass** er ein Band oder einen Faden mit einer identischen Zusammensetzung wie die gemischten Bänder, welche die Längsrichtung bilden, in einer Richtung angeordnet umfasst, die zu den Verstärkungsfasem deutlich quer verläuft und beispielsweise im Zickzack durch den Stoff verläuft.

9.  Verfahren zur Herstellung eines in einer Richtung verlaufenden Stoffs aus einem Verbundmaterial nach einem der Ansprüche 1 bis 8, **dadurch gekennzeichnet, dass** es umfasst:

    -   Bereitstellen von Bändern aus Verstärkungsfasem, die einem Vorgang des Brechens unterzogen wurden, und von Bändern aus Fasern aus einer thermoplastischen Matrix, welche einem Vorgang des Brechens oder des Schneidens unterzogen wurden,
    -   Bereitstellen einer engen Mischung aus Bändern der beiden Bestandteile mit $n_1$ Bändem aus Verstärkungsfasern und $n'_1$ Bändern aus Matrixfasern, durch Ausüben einer Zugkraft auf die verschiedenen parallelen Bänder und Hindurchführen derselben durch ein System (7 - 10) aus Nadeln, um die Fasern während des Mischens derselben parallel anzuordnen;
    -   aufeinanderfolgendes Durchführen dieses Vorgangs ausgehend von Bändern mit mehreren Bestandteilen (12), die jedesmal aus dem vorangegangen Vorgang resultieren;
    -   Führen einer Gesamtheit aus parallelen Bändern, bestehend aus einer engen Mischung aus Verstärkungsfasern und Matrixfasern, die aus den vorangegangenen Vorgängen erhalten wurden, auf kontinuierliche Art und Weise durch eine Wärmezelle (16), die auf eine Temperatur oberhalb von mindestens 10°C über der Schmelztemperatur der Materialbestandteile der thermoplastischen Matrix erwärmt wurde,
    -   Hindurchführen des Stoffs zwischen abgekühlten Zylindern (18), welche die Temperatur des Stoffs auf eine Temperatur unterhalb der Verfestigungstemperatur des Polymers senken, und welche einen Druck auf den Stoff ausüben, um die Bildung einer Vorform sicherzustellen, welche aus Verstärkungsfasern besteht, die zueinander parallel sind, und die in einer festen Matrix aus thermoplastischem Polymer eingebettet sind.

10. Verfahren nach Anspruch 9, **dadurch gekenn-** **zeichnet, dass** vor dem kontinuierlichen Einführen des Stoffs in die Wärmezelle ein Band oder eine Faser mit einer identischen Zusammensetzung wie die gemischten Bänder, welche die Längsrichtung bilden, auf diesen aufgebracht werden, wobei es/ sie beispielsweise eine Zickzacklinie bildet, in einer Richtung, die zu der Richtung der Verstärkungsfasern quer verläuft.

## Claims

1.  A unidirectional web of composite material, **characterised in that** it comprises an intimate mixture of mixed ribbons of long, discontinuous reinforcing fibres (14) obtained by cracking and long thermoplastic matrix fibres (15), these different fibres being parallel in the mixture.

2.  A unidirectional web according to claim 1, **characterised in that** the mean length of the reinforcing fibres is of the order of 80 mm with a length variation of less than or equal to 35 % with respect to said mean length.

3.  A unidirectional web according to either one of claims 1 or 2, **characterised in that** the number of runs T of reinforcing fibres in the final mixture is greater than 300.

4.  A unidirectional web according to any one of claims 1 to 3, **characterised in that** the constituent reinforcing fibres of a web are selected from at least one of the following groups of materials:

    -   carbon derived from PAN, pitch or rayon precursors, with the criterion: 190 GPa < E < 700 GPa (where E is the modulus in tension),
    -   E-, R-, S- or D-glass,
    -   a para-aramid, with the criterion: 60 GPa < E < 140 GPa (where E is the modulus in tension),
    -   a type AS-H-M polybenzimidazole (PBO) with the criterion: E > 190 GPa (where E is the modulus in tension).

5.  A unidirectional web according to any one of claims 1 to 4, **characterised in that** the constituent matrix fibres of a web are selected from at least one of the following groups of thermally stable materials: polyphenylene sulphide (PPS), polyether imide (PEI), polyether sulphone (PES), polyether ether ketone (PEEK), polyether ketone (PEK).

6.  A unidirectional web according to any one of claims 1 to 4, **characterised in that** the constituent matrix fibres of a web are selected from at least one of the following groups of standard thermoplastic materials: polyether terephthalate (PET), polyamide (PA), polypropylene (PP), polycarbonate (PC), polybutadiene terephthalate (PBT), polyethylene (PE).

7. A unidirectional web according to any one of claims 1 to 6, **characterised in that** the average length of the cut or cracked matrix fibres is between 40 and 180 mm.

8. A unidirectional web according to any one of claims 1 to 7, **characterised in that** it comprises a ribbon or thread with a composition identical to that of the mixed ribbons which extend in the longitudinal direction, disposed in a direction which is substantially perpendicular to that of the reinforcing fibres, by being deposited as a zigzag on the web, for example.

9. A method of producing a unidirectional web of composite material according to any one of claims 1 to 8, **characterised in that** it consists of:

   - producing ribbons of reinforcing fibres which have been subjected to a cracking operation and ribbons of thermoplastic matrix fibres which have been subjected to a cracking or cutting operation,
   - producing an intimate mixture of ribbons of these two components comprising $n_1$ ribbons of reinforcing fibres and $n'_1$ ribbons of matrix fibres, by exerting a tension on the different parallel ribbons and by passing them into a system of needles (7-10) for making the fibres parallel to each other whilst mixing them,
   - performing this same operation successively on the multi-component ribbons (12) which result from the preceding operation each time,
   - continuously introducing an array of parallel ribbons, comprising an intimate mixture of reinforcing fibres and matrix fibres obtained in the course of the preceding operations, into a heated enclosure (16) and bringing them to a temperature which is higher by several tens of °C than the melting point of the material which forms the thermoplastic matrix,
   - passing the web between cooled cylinders (18), which reduce the temperature of the web to a temperature below the solidification temperature of the polymer, and which exert pressure on the web to effect the formation of a preform comprising reinforcing fibres which are parallel to each other and which are enveloped by a solid matrix of thermoplastic polymer.

10. A method according to claim 9, **characterised in that** that before the web is introduced into the heated enclosure it consists of continuously depositing on said web a ribbon or thread which has a composition identical to that of the mixed ribbons which extend in the longitudinal direction, and which forms zigzags, for example, in a direction perpendicular to the direction of the reinforcing fibres.

FIG 1

FIG 2

EP 1 299 226 B1

FIG 3

FIG 4

FIG 5